# EUROPEAN PATENT SPECIFICATION

(11) **EP 2 149 038 B1**
(45) Date of publication and mention of the grant of the patent: **11.07.2018**
(21) Application number: 08754622.2
(22) Date of filing: 21.05.2008
(51) Int. Cl.: G01J 3/46

(54) **METHOD FOR COLOR MATCHING**
VERFAHREN ZUR FARBABSTIMMUNG
PROCÉDÉ DE MISE EN CORRESPONDANCE DE COULEURS

(30) Priority: 24.05.2007 US 931874 P
(43) Date of publication of application: 03.02.2010
(73) Proprietor: Coatings Foreign IP Co. LLC, Wilmington, DE 19801 (US)
(72) Inventor: KETTLER, Wilhelm, 42105 Wuppertal (DE)
(74) Representative: LKGLOBAL Lorenz & Kopf PartG mbB Patentanwälte
(86) International application number: PCT/US2008/006512
(87) International publication number: WO 2008/150378

(56) References cited:
- EP-A- 0 444 689
- WO-A-2008/024295
- US-A1- 2004 252 883
- US-B1- 6 449 045

## Description

### Field of Invention

The invention relates to a method for color matching a reference color formulation to a defined color shade standard. The process has applications in the field of color-imparting and special-effect-imparting surface coatings. It can be used in particular in matching color shades in automotive repair surface coatings.

### Description of Related Art

If color standards have to be matched and tinting is to be done, the number of always required tinting steps is a decisive measure for the economic efficiency of the process. In particular in vehicle repair surface coatings the number of tinting steps is a measure of the effectiveness of the entire repair coating process.

The process of colour matching is instrumentally supported by an appropriate pigment mixture model describing the relationship between the reflectance and transmittance properties of a given pigmentation, which can also be determined experimentally by means of a spectrophotometer, and the optical properties of the individual colorants. The latter properties have to be determined in advance for a colorant assortment by means of a calibration echelon.

In a first step the reflectance properties of, e.g., a coated vehicle body part (standard) are measured by means of an appropriate spectrophotometer. The experimental spectrum is used in a subsequent formula retrieval process in a database intended to identify a stored recipe and the corresponding measured reflectance spectrum, which is optimally suited for the next recipe correction step, if this step is needed at all. Since the measured car-part generally exhibits a residual colour difference with respect to the retrieved formula, further steps have to be carried out to reduce this colour difference to a size well within the desired tolerance frame. This correction process is also supported instrumentally.

The recipe correction methodology currently used in colour tools operates in colour space and makes use of a Taylor expansion of the colour vector of a formulation with respect to the concentrations of all colorants used. Only terms up to the first order are kept leading to a linear set of equations for the desired concentration changes for all colorants. Using these first order expansion coefficients and the known residual specific colour difference values between sample and standard a set of concentration changes for all colorants can be derived.

The standard methods in use for instrumental shading are for instance described in R. McDonald (ed.), Colour Physics for Industry, Society of Dyers and Colourists, Bradford (1987) and in R. S. Berns, Principles of Colour Technology, 3rd edition, John Wiley & Sons, New York (2000).

An obvious disadvantage of the standard shading method is the fact that its convergence behaviour *per definitionem* can not be better than linear and that the efficiency deteriorates markedly with increasing residual colour difference between standard and sample. Hence, the performance of the shading method is clearly limited by its inherent approximations.

Accordingly there is a need to significantly improve the convergence properties of recipe correction methods for solid and gonioapparent colour shades and to aim at reducing the number of hits required to match a given standard on the one hand and to improve the robustness and flexibility of the calculational procedure on the other.

US 2004/252883 A1 describes a colour recipe calculation method for matt finished, solid colour shades, by means of which it is possible to determine the proportion of matting agents in a colour recipe in a manner decoupled from the actual calculation of the recipe and is based on a conventional spectrophotometric characterization of a matt sample using a standardised 45°/0° measurement geometry along with an established gloss measurement, or alternatively using a spectrophotometer equipped with a d/8° measurement geometry and analyzing readings taken with the specular component included and excluded.

US 6,449,045 B1 describes a system and method from reconstruction of spectral curves using measurements for a color sensor and statistical techniques. A limited number of voltage measurements are received from a multiple illuminant color sensor at the direction of a color sensor controller. The received sensor voltages are normalized in accordance with a calibration look-up table. Next, the normalized sensor voltages are converted to reflectance values based on a correction look-up table. Then, a reconstruction look-up table is used to convert the reflectance values at a redetermined wavelength to reflectance values with a predetermined wavelength separation.

EP 0 444 689 A describes a spectrophotometer apparatus, which is adapted to provide spectral reflectance measurements of object samples. The apparatus comprises a source light and a reflection optics assembly. Signals representative of reflected light are analyzed and data provided to an operator representative of the spectral response characteristics of the object sample. The apparatus further comprises a side sensor having a fixed spectral response characteristic for compensating the reflectance measurements in accordance with the light intensity emanating from the lamp. For purposes of calibration, a series of time-sequenced measurements are made of a reference sample. Utilizing these measurements, the apparatus provides computations of compensation coefficients for each spectral segment. The compensation coefficients are utilized, with the side sensor measurements, to provide normalization of the reflectance measurements for each segment and for each measurement within the timed sequence. For each segment, a scale factor is then determined. The scale factors, compensation coefficients and side sensor measurements are employed to compensate actual reflectance measurements, with further compensation provided by a determination of temperature coefficients.

WO 2008/024295 A describes a method for color matching a reference color formulation to a defined color shade standard. The method comprises the steps 1. Measuring the reflectance spectrum R_{ST} of a color shade standard, 2. Mixing a paint according to a recipe for the color shade standard and applying the paint to a substrate, 3. Measuring the reflectance spectrum R_{PT} of the applied paint, 4. Recalculating the theoretical reflectance spectrum R_{RPT} for the recipe of the applied paint, 5. Calculating the difference spectrum AR between the measured reflectance spectrum R_{PT} of the applied paint and the recalculated reflectance spectrum R_{RPT}, 6. Adjusting the reflectance spectrum R_{ST} of the color shade standard with the difference spectrum AR, 7. Calculating a recipe on basis of the modified reflectance spectrum R_{STM}, 8. Mixing a pajnt according to the recipe and applying the paint to a substrate.

The objective of the present invention was therefore to avoid the restrictions of conventional methods for recipe correction and to increase the efficiency of shading processes. Furthermore the objective of the present invention was to provide a method for matching reference color formulations to a defined color shade standard, which reduces the number of tinting steps particularly in automotive repair surface coatings.

### Summary of the Invention

The present invention is directed to a method for matching a reference color formulation to a defined color shade standard comprising the following steps:
1. Measuring a reflectance spectrum R_{ST} of the color shade standard,
2. Identifying a recipe for the color shade standard from a database containing color recipes and the corresponding measured reflection spectrum R_{PT}
3. Calculating the theoretical reflectance spectrum R_{RPT} for the identified recipe,
4. Calculating the difference spectrum ΔR between the measured reflectance spectrum R_{PT} and the calculated reflectance spectrum R_{RPT} obtained in step 3,
5. Adjusting the reflectance spectrum R_{ST} of the color shade standard with the difference spectrum ΔR obtained in step 4 and creating a modified reflectance spectrum R_{STM} of the color shade standard,
6. Calculating a recipe on basis of the modified reflectance spectrum R_{STM},
7. Mixing a paint according to the recipe calculated in step 6 and applying the paint to a substrate.

If the residual color difference between the paint applied in step 7 and the color shade standard as, e.g., between the repaired coated surface of car body, and the originally coated surface of the car, is still not acceptable, the entire process is repeated again. The reflectance spectrum R_{PT} of the applied paint is measured and steps 3 to 7 are repeated. The only difference is, that now the measured reflectance spectrum R_{PT} of the applied paint replaces the measured reflection spectrum R_{PT} identified from the database. Accordingly in step 3 the theoretical reflectance spectrum R_{RPT} is calculated for the recipe obtained in step 6 of the previous tinting step.

These process steps are repeated until a given match criterion is fulfilled.

Generally, the corresponding color coordinates as, e. g., the triplet of tristimulus values or the L*, a*, b* values of the more uniform CIELab color space can be used in the present invention instead of using the reflectance spectra, i.e., instead of a spectral match criterion a color space match criterion can also be applied.

Therefore, the present invention is also directed to a method for matching a reference color formulation to a defined color shade standard comprising
1. Experimentally determining color coordinates C_{ST} of the color shade standard,
2. Identifying a recipe for the color shade standard from a database containing color recipes and the corresponding experimentally determined color coordinates C_{PT}
3. Calculating the theoretical color coordinates C_{RPT} for the identified recipe,
4. Calculating the difference ΔC between the experimentally determined color coordinates C_{PT} corresponding to the identified recipe and the calculated color coordinates C_{RPT} obtained in step 3,
5. Adjusting the color coordinates C_{ST} of the color shade standard with the difference of the color coordinates ΔC obtained in step 4 and creating modified color coordinates C_{STM} of the color shade standard,
6. Calculating a recipe on basis of the modified color coordinates C_{STM},
7. Mixing a paint according to the recipe calculated in step 6 and applying the paint to a substrate.

The color coordinates as, e.g., the triplet of tristimulus values or the L*, a*, b* values of the CIELab color space can be derived from the measured reflectance spectra in a way well-known to person skilled in the art of colourmetrics or can be measured directly with an appropriate measuring device.

It goes without saying that the method of the present invention is applicable if the first tinting step in a color matching process doesn't lead to an acceptable result, i.e., if the sprayed out paint formulated on the basis of the recipe identified from the database doesn't match the color shade standard or if the difference between the reflection spectrum of the color shade standard and the reflection spectrum belonging to the recipe identified from the database is not acceptable.

### Brief Description of Drawings

Figure 1 is a schematic flow diagram of the procedure of the present invention.
Figures 2 to 4 show the course of matching a green solid color shade standard comprising five colorants: white, carbon black, yellow, blue, and green.
Figure 5 shows the change of the target spectrum for a single correction step.
Figure 6 displays the difference spectrum ΔR between standard and the various performed correction steps.
Figures 7 to 11 show the course of matching a violet gonioapparent color shade comprising a flop control agent (fca) and five colorants: Al, Mica-blue, red, violet, and carbon black. The concentration variation for all recipe constituents is given as a function of tinting steps.

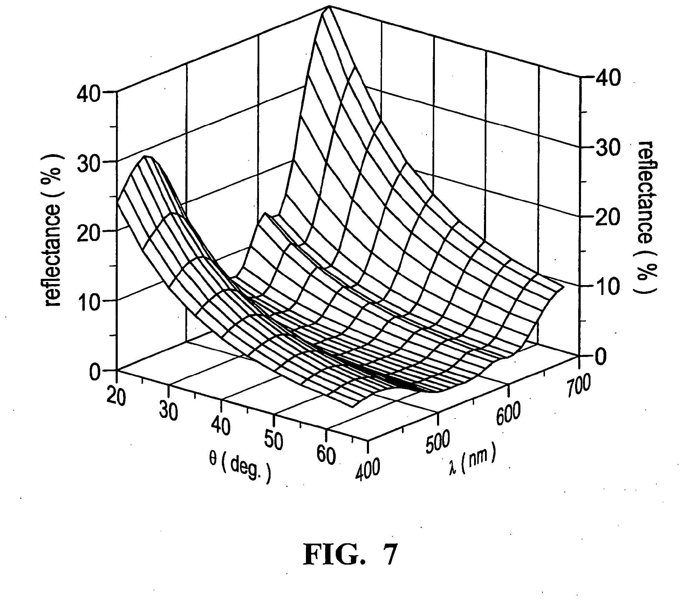

Figure 7 depicts the reflectance surface of the standard as a function of wavelength and observation angle.

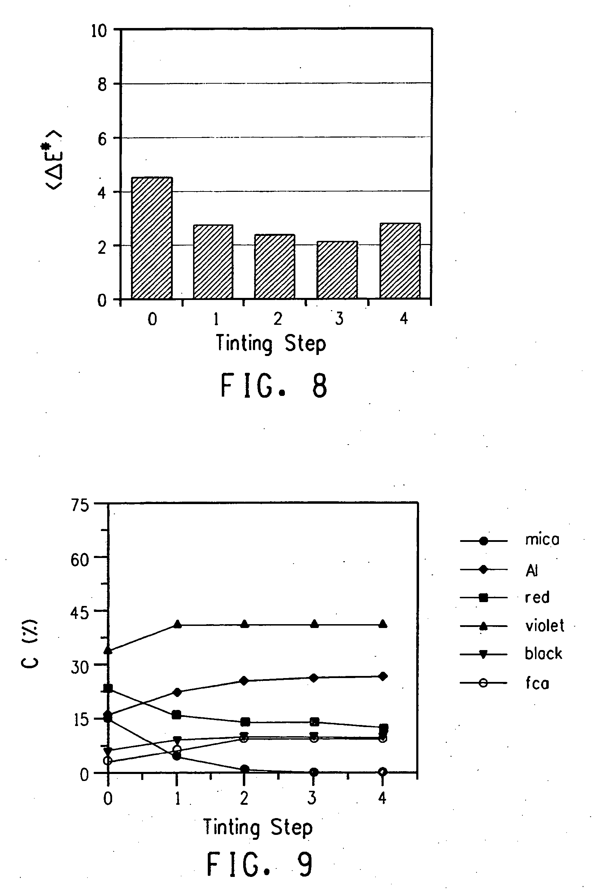

Figure 8 shows the color difference between standard and sprayed-out recipe as a function of tinting steps.
Figure 9 displays the concentration variation for all recipe constituents as a function of tinting steps.

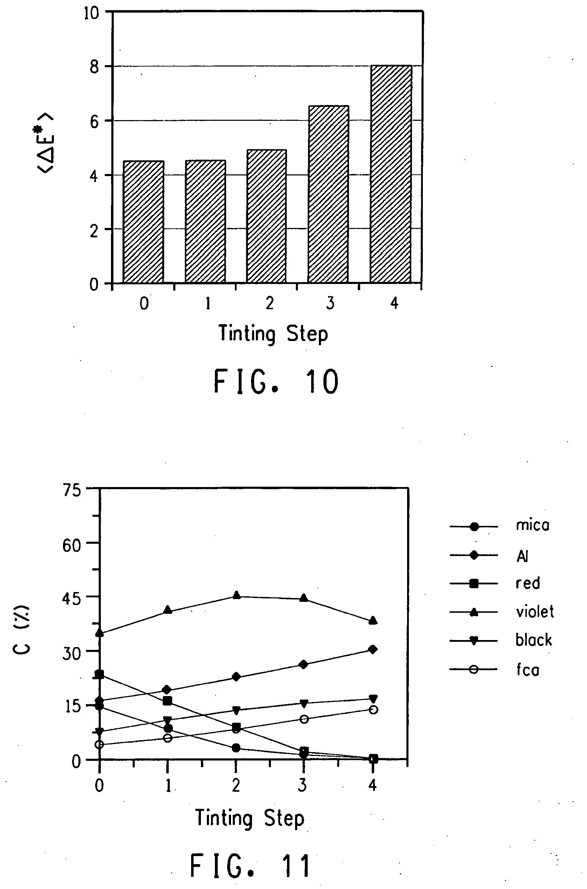

Figure 10 shows the color difference between standard and sprayed-out recipe as a function of tinting steps for the conventional correction factor method
Figure 11 displays the concentration variation for all recipe constituents as a function of tinting steps for the conventional correction factor method.

### Detailed Description of the Embodiments

The standard recipe correction method converts a non-linear minimisation problem into a linear one, which can be solved directly with standard methods of linear algebra. Consequently, the convergence behaviour of this linearised approach can of course only be linear. The validity of the linear approximation is limited to a rather narrow region around the starting position of a reference color formulation. The efficiency of the algorithm significantly deteriorates in case of larger colour differences between reference and standard.

The present invention replaces the linear approximation by a non-linear approach, which, by its very nature, is more robust than any linear method and as such exhibits better convergence properties. The rationale of the invention is based on the fact that the difference between the predicted and measured reflectance spectrum of a formulation is a measure for all inherent error sources of the entire process (model error, capability error, measurement error, error in optical material parameters, process error, etc.). This known difference has been used to modify the reflectance spectrum of the standard and create an interim virtual standard, which subsequently can be matched again by standard methods of recipe calculation (optimisation in reflectance as well as colour space is possible). The method is independent of the type of finish, i. e., it can be applied to solid as well as gonioapparent colour shades.

The method of the present invention is based on a comparison of spectral data of measured reflection spectra (or alternatively on a comparison of the corresponding color coordinates) of color shades of known pigmentation and the corresponding theoretical expectation values. The more samples are available, the more information can be collected about the coloristic deviations between the materials used for the pigment calibration and the actually employed raw materials for the color matching. Exploiting the complete information accumulated in all tinting steps so far a procedure for recipe correction of solid and effect color shades with convergence behaviour emerges, when using the method of the present invention. Generally, when using the new method a recipe stabilizes after three to five correction steps. Compared to conventional procedures a termination criterion can be defined, allowing for an almost automation and acceleration of the elaboration process of formulas. Furthermore, the procedure offers the possibility to define further tinting components in addition to the actual recipe constituents.

The invention will be explained in greater detail below.

The term "reflection spectrum" shall mean reflection spectrum in case of solid color shades and reflection surface in case of special effect, i.e., gonioapparant color shades.

Colorant system should be understood to mean any system of absorption pigments and/or special-effect pigments comprising all pigments which shall be used for recipe formulation. The number and choice of pigment components are not subject to restrictions here. They may be adapted in any manner to the relevant requirements.

In step 1 of the present invention the reflectance spectrum R_{ST} of a color shade standard to be matched is measured. Measuring is done with a spectrophotometer at a single measuring geometry (as, e. g., 45°/0° or d/8°) for solid color shades and at multiple measuring geometries by means of a goniospectrophotometer suited for special effect color shades. The color shade standard is e.g. a surface of a substrate to be repair coated or a part thereof, in particular the color shade standard is the coated surface of a car body or a part thereof.

In step 2 of the present invention a recipe is identified from a database containing color recipes and the corresponding measured reflection spectra R_{PT}. Usually those databases are used in vehicle repair coating business by end-users as, e.g., in a repair body shop. The databases contain a number of pre-developed color formulas based on a defined colorant system, i.e. a defined assortment of colorants. The measured reflectance spectra and/or the color coordinates of each color formula are also stored in the database. Identification of a suitable color formulation is carried out in a first step on the basis of the stored reflectance data. Instead of the reflectance spectra the color coordinates can also be used as selection criterion.

In step 3 of the present invention the theoretical reflectance spectrum R_{RPT} of the recipe identified in step 2 is calculated. The theoretical reflectance spectrum R_{RPT} is recalculated on basis of the optical material parameters of the colored pigments of the recipe, which have been experimentally determined in advance and, e.g., stored in a database. This is done according to a procedure well-known to a person skilled in the art.

In a next step (step 4) the difference spectrum ΔR between the measured reflectance spectrum R_{PT} of the identified recipe (as stored in the database) and the calculated theoretical reflectance spectrum R_{RPT} obtained in step 3 is calculated.

In the comparison between the measured reflectance spectrum R_{PT} and the reflection spectrum R_{RPT} theoretically recalculated for the same formula generally differences may be found, which can be traced back to the limits of the standardisation abilities of colorants, the recipe dependent interactions of the coloring components among each other, the finite accuracy of the optical material parameters, limitations of the employed theoretical model, variations in the application conditions, and measuring errors. The difference between measured and recalculated reflectance spectrum is a measure for the mentioned deficiencies.

Therefore in step 5 the reflectance spectrum R_{ST} of the color shade standard is adjusted with the difference spectrum ΔR obtained in step 4 obtaining thereby a modified reflectance spectrum R_{STM} of the color shade standard.

In step 6 a modified recipe is calculated on basis of the modified reflectance spectrum R_{STM}. With other words the modified reflectance spectrum of the color shade standard R_{STM} is matched by usual recipe calculation. This can be done by varying the components of the initial recipe and eventually adding additional defined tinting components, which are available in the given colorant system.

Recipe calculation is done according to procedures well-known to a person skilled in the art. Recipe calculation is usually based on a given colorant system.

Prerequisite of the recipe calculation is the knowledge of the optical material parameters of all colored constituents of the available colorant system. They have to be determined experimentally in advance for any colorant of the system by means of a calibration echelon. The respective calibration echelon to be produced is of course closely connected to the radiative transfer model utilized. In the isotropic case two material parameters have to be determined, namely the scattering and absorption coefficients, respectively. For this purpose at least two different blends of different coloristic behaviour have to be measured. The model explicitly accounting for the anisotropy of scattering events contains further wavelength-dependent material constants used for the parameterisation of the phase function. In case of a neural network model the optical properties of all pigments are hidden and captured in the weights of the network structure.

In step 7 a paint is mixed according to the calculated modified recipe and sprayed-out. Preparation and application of the paint sample can be done in a usual way. The paint can be sprayed out onto metal test panels for example or can be applied directly to the substrate, e.g. to the damaged coated surface of a car body. The applied paint layer can then be cured or dried under desired conditions.

As described already above, if the residual color difference between the color shade standard and the sprayed-out paint is still not acceptable the entire process is repeated. The color difference can be assessed visually or on the bases of the reflectance spectra.

Accordingly the reflectance spectrum R_{PT} of the applied paint is measured and steps 3 to 7 are repeated, with the only difference, that now the measured reflectance spectrum R_{PT} of the sprayed-out paint replaces the measured reflection spectrum identified from the database.

This is repeated until a given match criterion is fulfilled.

The assessment of the quality of a match can be made strictly visually or instrumentally, or a combination of both approaches may be utilised. In case of an instrumental assessment depending on the area of application (e. g. Refinish) and associated acceptance solid various metrics may serve as a termination criterion for the shading process. Typically the residual color difference in a uniform color space (as, e. g., CIELab-76 or DIN-99) or a specific color difference formula (as, e. g., CIE94 or CIEDE2000) is adopted for this purpose, where a threshold value is agreed on separating accepted and rejected color regions. In case of gonioapparent colors a generalisation of the formalism has to be made to properly account for the angular dependence of the color appearance.

A strict mathematical termination criterion may be formulated based on an analysis of the convergence properties of the individual concentrations of all recipe components as a function of the number of correction steps. The functional behaviour of the individual concentrations of all components as a function of correction steps has to be approximated by an appropriate model function, which can be fitted to the experimental results by means of an efficient fitting routine to determine the model parameters. For a three-parameter function at least three data sets are needed for the estimation of the fitting parameters: the first sprayed-out recipe, the first sprayed-out correction, and the calculated second correction.

Using the estimated parameter values, the asymptotic behaviour of the model function can be calculated. If the concentration variation with the number of correction steps is correctly described by the model function the instrumental elaboration process can now be terminated by a unique mathematical criterion.

The quality of the asymptotic recipe derived from three parameter sets is closely related to the applicability of the model function and to the influence of statistical and systematic errors. Both error sources inevitably lead to deviations from the "ideal" asymptotic recipe and are discernible in special cases, if for instance the asymptotic concentration of a recipe constituent for a monotonically decreasing (increasing) function is higher (lower) than the value of the last experimental data set (second calculated concentration). It is obvious to disregard this asymptotic recipe and to proceed with a normal recipe correction step. The data accuracy can be improved further by estimating more than three correction steps. The subsequently available fourth data set for the asymptotic reduces the influence of all error sources considerably (over-determined set of equations!) and generally leads to an almost "ideal" corrected asymptotic recipe. At least now the recipe correction procedure can be terminated, since all instrumental potentialities for improvement of a recipe have been exhausted.

Experiments have clearly revealed that the convergence behaviour of the devised method is significantly better than linear and can be approximated by an appropriate model function to a sufficient degree of accuracy. Hence the performance of the correction method is clearly superior to the conventional linearised approach and certainly leads to a reduction in the number of hits in the shading process. The model function can also be utilised to extrapolate to correction step infinite. In this sense a simple analysis tool can be added to the correction scheme to reduce the number of hits by extrapolation and to additionally improve the convergence performance on the one hand, and on the other to establish a tool clearly indicating the limits of instrumental recipe correction (termination criterion).

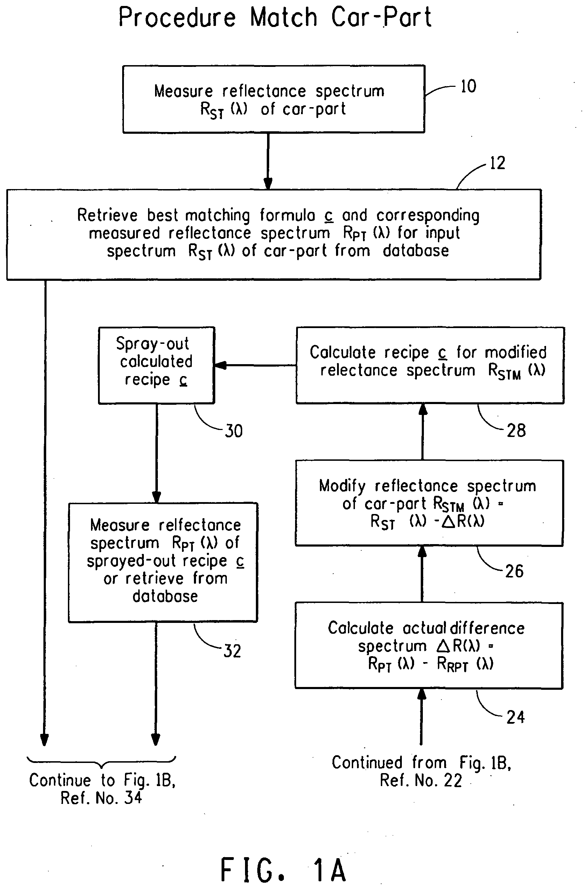

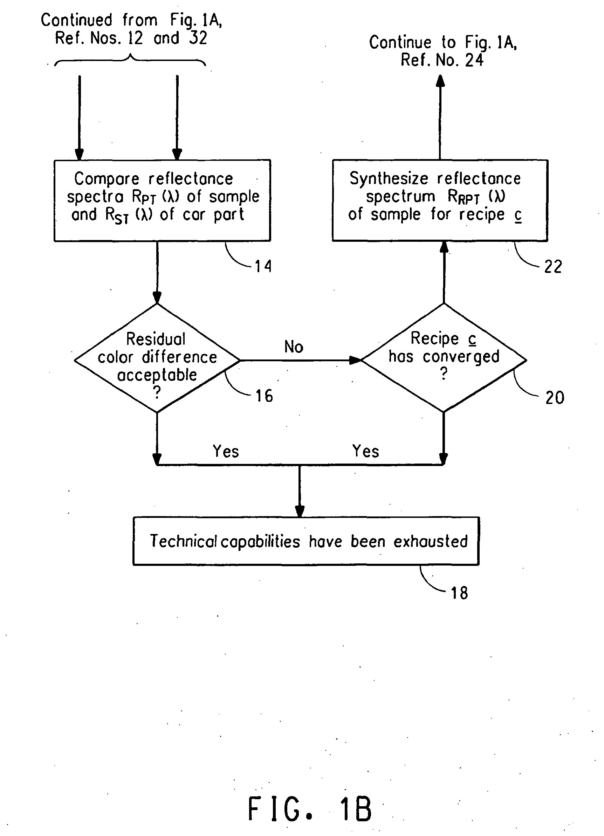

A schematic flow diagram of the procedure of the present invention is given in figures 1A and 1B. A coated part of a car body is used as color shade standard (10).

Generally the spectrum of the color shade standard is adjusted with the spectral difference between the measured spectrum R_{PT} of the identified recipe or of the sprayed out paint in repeating steps and the corresponding recalculated theoretical spectrum R_{RPT} for the same formula (24, 26). For this modified new spectrum of the color shade standard a new recipe is calculated based on the components used so far and eventually further tinting components (28). The described procedure is repeated until a defined termination criterion is fulfilled. This means that the procedure is repeated until the corrected color recipe has stabilized (i. e., the change of the concentrations of all components is sufficiently small or falls short of a given limiting value, respectively) and/or the remaining color difference hits a pre-set tolerance frame (16, 20).

The spectral difference ΔR (ΔR = R_{PT} - R_{PTR}) between experimental sample spectrum and the corresponding predicted reflectance spectrum is a measure of the total process error including failures of the radiative transfer model, variations in the physical structure of the characterisation data and mistakes in processing as, e. g., incorrect colorant weighing or wrong application conditions. The latter two systematic error sources generally introduce an erratic component into the correction process having a negative impact on the convergence properties of any recipe correction method.

Compared to that, e.g., the known linear vector shading method does not make use of all information generated in the course of the correction process. Only the color difference between the standard and e.g. the actual color shade is considered, while the misfit between actual and predicted color shade positions or reflectance functions is totally ignored.

If these systematic error contributions dominate the total process error, no convergence within the limits defined by their behaviour can be expected, since the target is moving randomly. Only a tighter process control will help to re-establish a well-behaved recipe correction algorithm.

The correction method of the present invention offers the advantage of excellent convergence properties, whereby the number of correction steps can be restricted in a natural way. The convergence is sufficiently fast for all potential operational areas; in any case the procedure comes to a halt after three to five steps. A unique termination criterion indicating instrumental limitations of recipe correction could be defined. Due to these optimal properties of the correction procedure matching of color shade standards, e.g. matching of a coated surface to be repair coated, to a great extent can be automated. Furthermore, in the course of correction additional tinting components beyond the actual recipe constituents of the recipe identified first from the recipe database can be defined informally and used for the optimisation of the match results. The existing restriction of the correction factor method, namely that in the course of the correction no component can be thrown out of the recipe (numerical instability of the correction factor method), does as well no longer exist in the new procedure.

The direct approach to the difference in optical behaviour of the materials used for pigment calibration and the colorants available for matching of a color shade is offered by a comparison between the measured reflectance spectrum of a color shade and the recalculated spectrum of the corresponding formula. Only in this way specific spectral differences can be made transparent and accounted for in the correction. Using this spectral information the reflectance spectrum of the standard is modified and subsequently matched again. Other procedures as, i. e., the method of correction factors, compare the concentrations of two recipes and as such fall back on already transformed quantities that no longer contain direct spectral information. The risk of metameric corrections is minimised by comparing spectral data, since within the algorithm for the actual correction step, which is based on a conventional color recipe calculation for the modified spectrum of the standard, the figure of merit of the iteration is the optimum curve fitting applying a suitable weighting function.

Finally the present invention provides a highly flexible and effective procedure for recipe correction to match a given color shade standard which can be used for repair coating damaged coated substrate surfaces, in particular within vehicle repair coating.

The invention is explained more detailed in the following examples.

### EXAMPLES

### Example 1

### Recipe correction of a green solid color shade

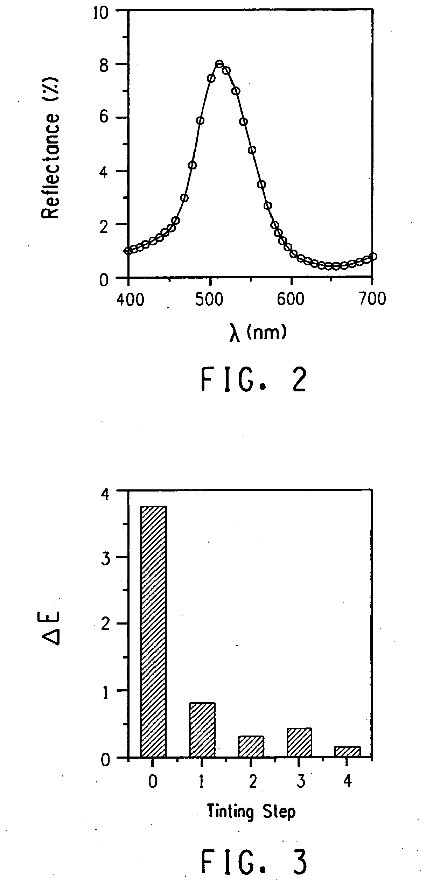

Figures 2 to 4 show the course of matching a green solid color shade. A recipe comprising the five colorants white, carbon black, yellow, blue, and green, has been identified from a database on the basis of the reflection spectrum. The recipe contains a green pigment and a second green component made of the complementary colors yellow and blue. Such complementary colors are known to react quite sensitive to changes of the amounts of ingredients.

Figure 2 depicts the reflectance spectrum of the standard as a function of wavelength measured with a spectrophotometer.

Figure 3 shows the color difference between standard and sprayed-out recipe as a function of tinting steps.

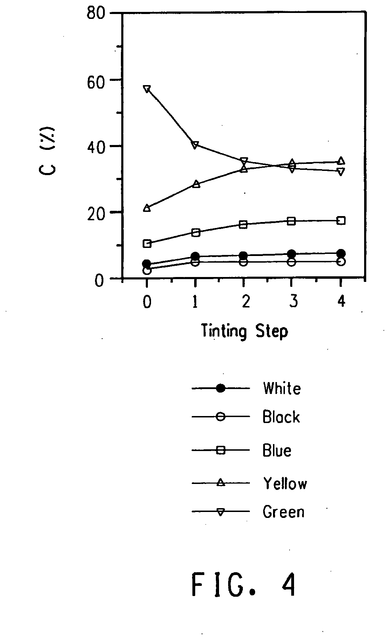

Figure 4 displays the concentration variation for all recipe constituents as a function of tinting steps.

Through the consideration of all information collected at each correction step the new procedure leads to a significant improvement of the recipe from a coloristic point of view, as can be seen from the on the average decreasing residual color difference. Also the dependence of the amounts of all recipe components with increasing number of correction steps exhibits an unambigious tendency towards stable values. As expected, the convergence behaviour of the devised spectral correction method in color space is clearly better than linear and is obviously superior to the linear vector shading approach.

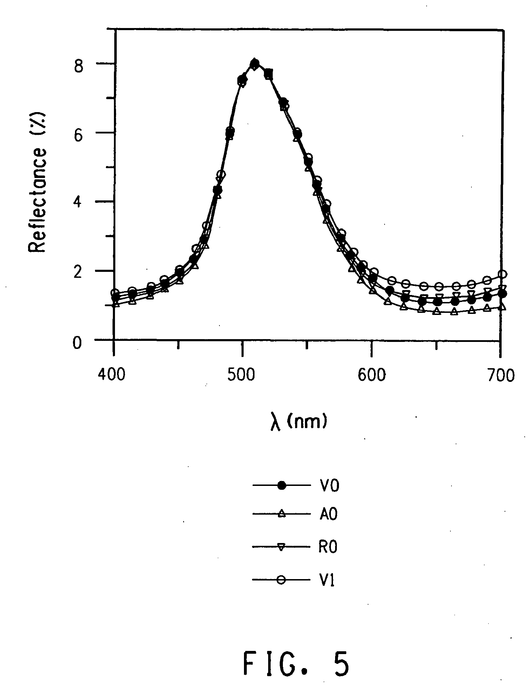

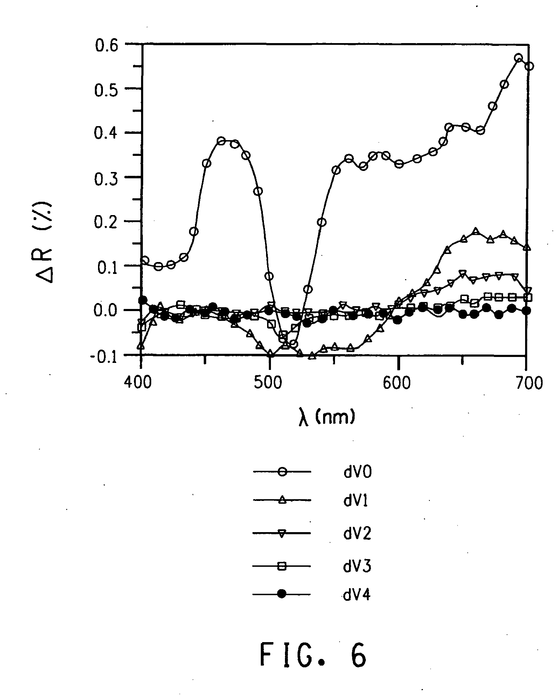

Figures 5 and 6 collect more details on the course of recipe correction in reflectance space. Figure 5 shows the change of the target spectrum for a single correction step.

Figure 6 displays the difference spectrum ΔR between standard and the various performed correction steps, impressively vindicates the theoretical expectation that ΔR rapidly diminishes with increasing number of correction steps to a level the statistical measurement error.

The curve labelled "V0" represents the measured reflectance spectrum of the standard (R_{ST}). The corresponding predicted match for this standard gives rise to the theoretically expected "R0" curve (R_{RPT}). When mixing and spraying out this recipe and measuring the panel leads to the "A0" curve (R_{PT}). The difference of the theoretically synthesized spectrum "RO" and the actually measured spectrum "A0" (R_{PT}) is due to all inherent preparatory, application, measurement, and model errors of the entire process including the misfit of the characterisation data set. Subtracting this difference spectrum ΔR = R0 - A0 from the spectrum "VO" of the standard creates a new virtual target spectrum (V1 = R_{STM}) that accounts for the total process error. Therefore, matching of this virtual target is expected to provide results considerably closer to the final stationary solution of the matching problem than the previous step.

After two tinting steps the recipe has been stabilized when using the method according to the invention. A satisfactory matching result has been achieved.

### Example 2

### Recipe correction of a special effect color shade

Figures 7 to 11 show the course of matching a special effect color shade standard using the procedure of the present invention in comparison to the conventional correction factor method, which has been implemented as single-step procedure.

Figures 7 to 11 show the matching of a violet gonioapparent color shade. The recipe identified from a database on the basis of the reflection spectrum contains a flop control agent (fca) and five colorants: Al, Mica-blue, red, violet, and carbon black. The concentration variation for all recipe constituents is given as a function of tinting steps as well as the extrapolated asymptotic values derived from three, four, and five data sets.

Figure 7 depicts the reflectance surface of the standard as a function of wavelength and observation angle.

Figure 8 shows the color difference between standard and sprayed-out recipe as a function of tinting steps.

Figure 9 displays the concentration variation for all recipe constituents as a function of tinting steps.

Figure 10 shows the color difference between standard and sprayed-out recipe as a function of tinting steps for the conventional correction factor method

Figure 11 displays the concentration variation for all recipe constituents as a function of tinting steps for the conventional correction factor method.

The special effect color shade contains as coloring constituents two interference pigments and three solid pigments. As can be seen from the reflection indicatrix depicted in Figure 7 the effect character of this color shade becomes obvious in the angular variation. Furthermore, in Figure 8 and Figure 9 the remaining color differences according to CIELab-76 and the recipe composition as a function of correction steps have been integrated. While according to the known single-step method of correction factors no improvement could be achieved with the correction calculation, the new procedure due to the consideration of all information collected at every step leads to a significant improvement of the recipe from a coloristic point of view, as can be seen from the decreasing mean residual color difference. In the latter case also the dependence of the amounts of all recipe constituents shows a clear tendency towards stable values with increasing number of correction steps, while the correction factor method does not show any saturation tendency at all. In the discussed example the efficiency of the new correction method becomes obvious in the fact, that due to the relatively small residual color difference of the sprayed-out first recipe the conventional correction procedure from the tendency leads to a deterioration of the recipe (pathological case), while the new method handles also this limiting case in a completely unproblematic way.

After three tinting steps the recipe has been stabilized when using the method of the present invention. A satisfactory matching result has been achieved.

## Claims

1. A method for matching a reference color formulation to a defined color shade standard comprising (I):
1. Measuring a reflectance spectrum R_{ST} of the color shade standard,
2. Identifying a recipe for the color shade standard from a database containing color recipes and the corresponding measured reflection spectra R_{PT},
3. Calculating the theoretical reflectance spectrum R_{RPT} for the identified recipe,
4. Calculating the difference spectrum ΔR between the measured reflectance spectrum R_{PT} and the calculated reflectance spectrum R_{RPT} obtained in step 3,
5. Adjusting the reflectance spectrum R_{ST} of the color shade standard with the difference spectrum ΔR obtained in step 4 and creating a modified reflectance spectrum R_{STM} of the color shade standard,
6. Calculating a recipe on basis of the modified reflectance spectrum R_{STM},
7. Mixing a paint according to the recipe calculated in step 6 and applying the paint to a substrate; or, comprising (II):
1. Determining experimentally color coordinates C_{ST} of the color shade standard,
2. Identifying a recipe for the color shade standard from a database containing color recipes and the corresponding experimentally determined color coordinates C_{PT},
3. Calculating the theoretical color coordinates C_{RPT} for the identified recipe,
4. Calculating the difference ΔC between the experimentally determined color coordinates C_{PT} corresponding to the identified recipe and the calculated color coordinates C_{RPT} obtained in step 3,
5. Adjusting the color coordinates C_{ST} of the color shade standard with the difference of the color coordinates ΔC obtained in step 4 and creating modified color coordinates C_{STM} of the color shade standard,
6. Calculating a recipe on basis of the modified color coordinates C_{STM},
7. Mixing a paint according to the recipe calculated in step 6 and applying the paint to a substrate.

2. The method of claim 1, wherein the reflectance spectrum R_{PT} of the paint applied in step 7 is measured and steps 3 to 7 are repeated, if the residual color difference between the color shade standard and the applied paint is still not acceptable, or, wherein the color coordinates C_{PT} of the paint applied in step 7 are experimentally determined and steps 3 to 7 are repeated, if the residual color difference between the color shade standard and the applied paint is still not acceptable.

3. The method of claim 2, wherein the step of measuring the reflectance spectrum R_{PT} of the paint applied in step 7 and steps 3 to 7 are repeated until a given termination criterion is fulfilled, or, wherein the step of experimentally determining the color coordinates C_{PT} of the paint applied in step 7 and steps 3 to 7 are repeated until a given termination criterion is fulfilled.

4. The method of claim 3, wherein the termination criterion is a mathematical termination criterion based on an analysis of the convergence properties of the individual concentrations of all recipe components as a function of the number of correction steps.

5. The method of any one of claims 1 to 4, wherein the color shade standard is a coated substrate surface.

6. The method of claim 5, wherein the substrate is a vehicle body or vehicle body part.

7. Use of the method of any one of claims 1 to 6 in vehicle repair coating.

## Patentansprüche

1. Verfahren zum Anpassen einer Referenz-Farbformulierung an eine definierte Farbschattierungsnorm, umfassend (I) :
1. Messen eines Reflexionsspektrums R_{ST} der Farbschattierungsnorm,
2. Identifizieren einer Rezeptur für die Farbschattierungsnorm aus einer Datenbank, die Farbrezepturen und die entsprechenden gemessenen Reflexionsspektren R_{PT} enthält,
3. Berechnen des theoretischen Reflexionsspektrums R_{RPT} für die identifizierte Rezeptur,
4. Berechnen des Differenzspektrums ΔR zwischen dem gemessenen Reflexionsspektrum R_{PT} und dem berechneten Reflexionsspektrum R_{RPT}, das in Schritt 3 erhalten wurde,
5. Einstellen des Reflexionsspektrums R_{ST} der Farbschattierungsnorm mit dem Differenzspektrum ΔR, das in Schritt 4 erhalten wurde, und Erzeugen eines modifizierten Reflexionsspektrums R_{STM} der Farbschattierungsnorm,
6. Berechnen einer Rezeptur auf der Basis des modifizierten Reflexionsspektrums R_{STM},
7. Mischen einer Farbe gemäß der Rezeptur, die in Schritt 6 berechnet wurde, und Auftragen der Farbe auf ein Substrat; oder, umfassend (II):
1. Experimentelles Bestimmen von Farbkoordinaten C_{ST} der Farbschattierungsnorm,
2. Identifizieren einer Rezeptur für die Farbschattierungsnorm aus einer Datenbank, die Farbrezepturen und die entsprechenden experimentell gemessenen Farbkoordinaten C_{PT} enthält,
3. Berechnen der theoretischen Farbkoordinaten C_{RPT} für die identifizierte Rezeptur,
4. Berechnen der Differenz ΔC zwischen den experimentell bestimmten Farbkoordinaten C_{PT}, die der identifizierten Rezeptur entsprechen, und den berechneten Farbkoordinaten C_{RPT}, die in Schritt 3 erhalten wurden,
5. Einstellen der Farbkoordinaten C_{ST} der Farbschattierungsnorm mit der Differenz der Farbkoordinaten ΔC, die in Schritt 4 erhalten wurde, und Erzeugen von modifizierten Farbkoordinaten C_{STM} der Farbschattierungsnorm,
6. Berechnen einer Rezeptur auf der Basis der modifizierten Farbkoordinaten C_{STM},
7. Mischen einer Farbe gemäß der Rezeptur, die in Schritt 6 berechnet wurde, und Auftragen der Farbe auf ein Substrat.

2. Verfahren nach Anspruch 1, wobei das Reflexionsspektrum R_{PT} der Farbe, die in Schritt 7 aufgetragen wurde, gemessen wird, und die Schritte 3 bis 7 wiederholt werden, wenn die restliche Farbdifferenz zwischen der Farbschattierungsnorm und der aufgetragenen Farbe immer noch nicht akzeptabel ist, oder wobei die Farbkoordinaten C_{PT} der Farbe, die in Schritt 7 aufgetragen wurde, experimentell bestimmt wurden, und die Schritte 3 bis 7 wiederholt werden, wenn die restliche Farbdifferenz zwischen der Farbschattierungsnorm und der aufgetragenen Farbe immer noch nicht akzeptabel ist.

3. Verfahren nach Anspruch 2, wobei der Schritt des Messens des Reflexionsspektrums R_{PT} der Farbe, die in Schritt 7 aufgetragen wurde, und die Schritte 3 bis 7 wiederholt werden, bis ein gegebenes Beendigungskriterium erfüllt ist, oder wobei der Schritt der experimentellen Bestimmung der Farbkoordinaten C_{PT} der Farbe, die in Schritt 7 aufgetragen wurde, und die Schritte 3 bis 7 wiederholt werden, bis ein gegebenes Beendigungskriterium erfüllt ist.

4. Verfahren nach Anspruch 3, wobei das Beendigungskriterium ein mathematisches Beendigungskriterium ist, das auf einer Analyse der Konvergenzeigenschaften der individuellen Konzentrationen aller Rezepturkomponenten als Funktion der Zahl der Korrekturschritte basiert.

5. Verfahren nach einem der Ansprüche 1 bis 4, wobei die Farbschattierungsnorm eine beschichtete Substratfläche ist.

6. Verfahren nach Anspruch 5, wobei das Substrat eine Fahrzeugkarosserie oder Teil einer Fahrzeugkarosserie ist.

7. Verwendung des Verfahrens nach einem der Ansprüche 1 bis 6 bei der Reparaturbeschichtung von Fahrzeugen.

## Revendications

1. Procédé d'harmonisation d'une formulation de couleur de référence avec une norme de teinte définie, comprenant (I) :
1. la mesure d'un spectre de réflectance R_{ST} de la norme de teinte,
2. l'identification d'une recette pour la norme de teinte à partir d'une base de données contenant des recettes de couleurs et du spectre de réflexion mesuré correspondant R_{PT},
3. le calcul du spectre de réflectance théorique R_{RPT} pour la recette identifiée,
4. le calcul du spectre différentiel ΔR entre le spectre de réflectance mesuré R_{PT} et le spectre de réflectance calculé R_{RPT} obtenu dans l'étape 3,
5. l'ajustement du spectre de réflectance R_{ST} de la norme de teinte avec le spectre différentiel ΔR obtenu dans l'étape 4 et la création d'un spectre de réflectance modifié R_{STM} de la norme de tête,
6. le calcul d'une recette sur la base du spectre de réflectance modifié R_{STM},
7. le mélange d'une peinture d'après la recette calculée dans l'étape 6 et l'applications de la peinture sur un substrat ; ou comprenant (II) :
1. la détermination expérimentale des coordonnées de couleur C_{ST} de la norme de teinte,
2. l'identification d'une recette pour la norme de teinte à partir d'une base de données contenant des recettes de couleurs et des coordonnées de couleur correspondantes déterminées expérimentalement C_{PT},
3. le calcul des coordonnées de couleur théoriques C_{RPT} pour la recette identifiée,
4. Le calcul de la différence ΔC entre les coordonnées de couleur déterminées expérimentalement C_{PT} correspondant à la recette identifiée et les coordonnées de couleur calculées C_{RPT} obtenues dans l'étape 3,
5. l'ajustement des coordonnées de couleur C_{ST} de la norme de teinte avec la différence des coordonnées de couleur ΔC obtenues dans l'étape 4 et la création de coordonnées de couleur modifiées C_{STM} de la norme de teinte,
6. le calcul d'une recette sur la base des coordonnées de couleur modifiées C_{STM},
7. le mélange d'une peinture d'après la recette calculée dans l'étape 6 et l'application de la peinture sur un substrat.

2. Procédé selon la revendication 1, dans lequel le spectre de réflectance R_{PT} de la peinture appliquée dans l'étape 7 est mesuré et les étapes 3 à 7 sont répétées si la différence de couleur résiduelle entre la norme de teinte et la peinture appliquée n'est pas encore acceptable ou dans lequel les coordonnées de couleur C_{PT} de la peinture appliquée dans l'étape 7 sont déterminées expérimentalement et les étapes 3 à 7 sont répétées si la différence de couleur résiduelle entre la norme de teinte et la peinture appliquée n'est pas encore acceptable.

3. Procédé selon la revendication 2, dans lequel l'étape de mesure du spectre de réflectance R_{PT} de la peinture appliquée dans l'étape 7 et les étapes 3 à 7 sont répétées jusqu'à ce qu'un critère de cessation donné soit rempli ou dans lequel l'étape de détermination expérimentale des coordonnées de couleur C_{PT} de la peinture appliquée dans l'étape 7 sont déterminées expérimentalement et les étapes 3 à 7 sont répétées jusqu'à ce qu'un critère de cessation donné soit rempli.

4. Procédé selon la revendication 3, dans lequel le critère de cessation est un critère de cessation mathématique basé sur une analyse des propriétés de convergence des concentrations individuelles de tous les composants de la recette en fonction du nombre d'étapes de correction.

5. Procédé selon l'une quelconque des revendications 1 à 4, dans lequel la norme de teinte est une surface de substrat revêtue.

6. Procédé selon la revendication 5, dans lequel le substrat est un corps de véhicule ou une pièce de corps de véhicule.

7. Utilisation du procédé selon l'une quelconque des revendications 1 à 6 dans la réparation de revêtements de véhicules.
